# EUROPÄISCHE PATENTSCHRIFT

(11) **EP 2 044 738 B1**
(45) Veröffentlichungstag und Bekanntmachung des Hinweises auf die Patenterteilung: **15.03.2017**
(21) Anmeldenummer: 07787829.6
(22) Anmeldetag: 23.07.2007
(51) Int. Cl.: H04L 12/00

(54) **VERFAHREN ZUM BETRIEB EINES DEZENTRALEN DATENNETZES**
METHOD FOR OPERATING A LOCAL AREA DATA NETWORK
PROCÉDÉ POUR L'EXPLOITATION D'UN RESEAU DE DONNÉES DECENTRALISÉ

(30) Priorität: 24.07.2006 DE 102006034155; 07.11.2006 DE 102006052451
(43) Veröffentlichungstag der Anmeldung: 08.04.2009
(73) Patentinhaber: Unify GmbH & Co. KG, 80807 München (DE)
(72) Erfinder: NIEBERGALL, Michael, 80335 München (DE); RUSITSCHKA, Steffen, 81543 München (DE); SOUTHALL, Alan, 69190 Walldorf (DE); ÖZTUNALI, Sebnem, 81543 Muenchen (DE)
(74) Vertreter: Fritzsche, Thomas
(86) Internationale Anmeldenummer: PCT/EP2007/057586
(87) Internationale Veröffentlichungsnummer: WO 2008/012291

(56) Entgegenhaltungen:
- BINZENHBFER A ET AL: "A Scalable Algorithm to Monitor Chord-based P2P Systems at Runtime" PARALLEL AND DISTRIBUTED PROCESSING SYMPOSIUM, 2006. IPDPS 2006. 20TH INTERNATIONAL RHODES ISLAND, GREECE 25-29 APRIL 2006, PISCATAWAY, NJ, USA,IEEE, 25. April 2006 (2006-04-25), Seiten 1-8, XP010920660 ISBN: 1-4244-0054-6
- BOSNEAG A ET AL: "Adaptive congestion control for hotspot management in structured peer-to-peer systems" CLUSTER COMPUTING AND THE GRID, 2004. CCGRID 2004. IEEE INTERNATIONAL SYMPOSIUM ON CHICAGO, IL, USA APRIL 19-22, 2004, PISCATAWAY, NJ, USA,IEEE, 19. April 2004 (2004-04-19), Seiten 82-89, XP010725927 ISBN: 0-7803-8430-X
- WONGRUJIRA K ET AL: "Incentive service model for P2P" COMPUTER SYSTEMS AND APPLICATIONS, 2005. THE 3RD ACS/IEEE INTERNATIONAL CONFERENCE ON CAIRO, EGYPT JAN. 3-6, 2005, PISCATAWAY, NJ, USA,IEEE, 3. Januar 2005 (2005-01-03), Seiten 433-439, XP010777693 ISBN: 0-7803-8735-X

## Beschreibung

Die Erfindung betrifft ein Verfahren zum Betrieb eines dezentralen Datennetzes umfassend eine Mehrzahl von Netzknoten, wobei die Netzknoten Anfragen mit Hilfe von Abfragewerten an das Datennetz richten können.

In dezentralen Netzwerken, beispielsweise in auf einer verteilten Hash-Tabelle basierenden Peer-to-Peer-Overlay-Netzen, werden Ressourcen dezentral auf die einzelnen Netzknoten verteilt. Es ist hierbei möglich, dass jeder einzelne Netzknoten mit Hilfe von Schlüsselwörtern nach entsprechenden Ressourcen sucht. Hierzu werden Abfragewerte verwendet, wobei aus einem Schlüsselwort ein eindeutiger Abfragewert erzeugt wird. Die Abfragewerte werden von den Netzknoten verwaltet, wobei jeder Netzknoten für vorbestimmte Abfragewerte zuständig ist. Jedem der Netzknoten ist ein eindeutiger Kennzeichner aus einem Schlüsselraum zugewiesen. Dies kann z.B. ein binärer Schlüsselraum mit n Bit Breite sein. Mit Hilfe der Abfragewerte, die z.B. ebenfalls aus dem Schlüsselraum mit n Bit Breite gebildet sind, richten Netzknoten z.B. Suchanfragen in das Netz. Ferner kann ein Netzknoten auch sog. Veröffentlichungsanfragen für einen bestimmten Abfragewert an den Netzknoten senden, der für den bestimmten Abfragewert zuständig ist. Mit solchen Veröffentlichungsanfragen teilt der aussendende Netzknoten mit, dass er Ressourcen, welche dem bestimmten Abfragewert und hierdurch dem entsprechenden Schlüsselwort zugeordnet sind, im Netz veröffentlichen bzw. publizieren möchte, d.h. den anderen Netzknoten zur Verfügung stellen möchte.

Die Abfragewerte sind beispielsweise Hash-Werte, welche mit einem Hash-Algorithmus generiert werden. Vorzugsweise sind die Abfragewerte in einer Tabelle hinterlegt, wobei jeder Tabelleneintrag einen entsprechenden Abfragewert sowie diesem Abfragewert zugeordnete Daten enthält, beispielsweise einen Verweis auf den Speicherort von entsprechenden Ressourcen.

Diese Daten stehen hierbei im Zusammenhang mit dem Schlüsselwort, aus dem der Abfragewert generiert wurde. Die Tabelle ist vorzugsweise dezentral in dem Datennetz verteilt, wobei jeder Netzknoten für einen Wertebereich der Tabelle zuständig ist.

Es kann nunmehr der Fall auftreten, dass bestimmte Ressourcen, das heißt bestimmte Abfragewerte, besonders oft durch entsprechende Anfragen im Netz angefragt, insbesondere gesucht und/oder veröffentlicht, werden. Es kommt dann zu einer Überlastung von denjenigen Netzknoten, die für die entsprechenden Abfragewerte verantwortlich sind. Solche Netzknoten werden auch als "Hot-Spots" bezeichnet. Bei der Überlastung eines Hot-Spots kann es zum Blockieren und Versagen dieses Netzknotens kommen. Die Folge ist, dass der Netzwerkverkehr im Bereich dieser Hot-Spots anwächst, so dass die Stabilität des gesamten Netzwerks gefährdet ist. Ferner verliert das Netzwerk an Leistungsfähigkeit.

Zur Lösung der Hot-Spot-Problematik ist es aus dem Stand der Technik bekannt, besonders populäre Daten auf einen oder mehrere Netzknoten zu replizieren. Beispielsweise können die populären Daten, für die ein entsprechender Netzknoten zuständig ist, direkt auf Nachbarknoten repliziert werden. Es ist jedoch auch eine Replikation auf beliebige andere, beispielsweise durch Algorithmen bestimmte Netzknoten möglich. Das Replizieren von Daten bringt jedoch das Problem mit sich, dass im Netzwerk immer gewährleistet sein muss, dass die replizierten Kopien aktuell sind. Dies erfordert weitere spezielle Mechanismen.

Ferner ist es bekannt, zu dem Datennetz ein weiteres logisches Netz vorzusehen, welches die Anfragen im Netz organisiert. Nachteilig hierbei ist, dass so genannte "keep alive"-Nachrichten notwendig sind, wodurch eine verhältnismäßig hohe Bandbreite der Übertragungskapazität allein durch das weitere logische Netz beansprucht wird. Es ist ferner die Verwaltung von Verbindungen notwendig, wobei auf die existierende, dezentral in dem Datennetz verteilte Tabelle zurückgegriffen wird.

Es sind aus dem Stand der Technik keine Verfahren bekannt, mit denen die Hot-Spot-Problematik zufrieden stellend gelöst werden kann.

Aufgabe der Erfindung ist es deshalb, ein Verfahren zum Betrieb eines dezentralen Datennetzes zu schaffen, bei dem die Überlastung eines Netzknotens aufgrund zu vieler Anfragen einfach und effektiv vermieden wird.

Diese Aufgabe wird durch die unabhängigen Patentansprüche gelöst. Weiterbildungen der Erfindung sind in den abhängigen Ansprüchen definiert.

Bei dem erfindungsgemäßen Verfahren sind mehreren Netzknoten jeweils ein oder mehrere Tabelleneinträge einer auf die Netzknoten verteilten Wertetabelle zugewiesen, wobei jeder Tabelleneintrag einen Abfragewert aus dem Schlüsselraum und dem Abfragewert zugeordneten Daten umfasst, wobei der Netzknoten für einen Abfragewert zuständig ist, dessen Kennzeichner kleiner oder gleich dem Abfragewert ist. Die Wertetabelle ist hierbei vorzugsweise die eingangs erwähnte verteilte Hash-Tabelle, wobei die Abfragewerte in der Hash-Tabelle Hash-Werte darstellen. Vorzugsweise wird sichergestellt, dass ein oder mehrere Schlüsselwörter eindeutig einem Abfragewert zugeordnet werden, was bei einer Verwendung einer verteilten Hash-Tabelle mit einem Hash-Algorithmus, beispielsweise SHA1, erreicht werden kann. Durch den Hash-Wert ist eine Zuordnung eines Tabelleneintrags zu einem bestimmten Netzknoten möglich. Die einem Abfragewert zugeordneten Daten sind z.B. Ressourcen, insbesondere Dateien, oder Verweise auf Speicherorte von Ressourcen im Datennetz.

Bei dem erfindungsgemäßen Verfahren wird für die mehreren Netzknoten jeweils die Häufigkeit überwacht, mit der Anfragen für die einem jeweiligen Netzknoten zugewiesenen Abfragewerte an den jeweiligen Netzknoten gerichtet werden. Unter Anfragen sind hierbei insbesondere die eingangs erwähnten Such- und/oder Veröffentlichungsanfragen zu verstehen. Das Verfahren zeichnet sich dadurch aus, dass im Falle, dass die Häufigkeit der Anfragen für einen oder mehrere Abfragewerte an einem jeweiligen Netzknoten einen vorbestimmten Schwellenwert überschreitet, zumindest der oder die Tabelleneinträge dieses oder dieser Abfragewerte wenigstens einem anderen Netzknoten zugewiesen werden, welcher in einem Anfragepfad der Anfrage liegt.

Durch eine solche Überwachung und Zuweisung eines häufig angefragten Abfragewertes zu einem anderen Netzknoten kann auf effektive Weise eine Überlastung des für einen Abfragewert zuständigen Netzknotens vermieden werden. Der Schwellenwert kann hierbei gemäß den Anforderungen und der Größe des Datennetzes entsprechend gewählt werden, beispielsweise kann der Schwellenwert heuristisch ermittelt werden. Bei dem erfindungsgemäßen Verfahren werden die Abfragewerte entlang eines Anfragepfads in kleinstmöglichem Umfang verteilt, wodurch der Aufwand zur Verwaltung des Abfragewertes verteilt und Suchanfragen schneller beendet werden können. Der Anfragepfad, der sowohl bei Veröffentlichungsanfragen als auch bei Suchanfragen durchlaufen wird, umfasst hierbei vorzugsweise diejenigen Netzknoten, welche bei einer Anfrage in das Datennetz durch den veröffentlichenden oder suchenden Netzknoten kontaktiert werden.

Bei einer in das Datennetz gerichteten Anfrage durch einen der Netzknoten erfolgen ein oder mehrere Schritte bis zum Erreichen des zuständigen Netzknotens, wobei jeder Schritt eine Anfrage von einem der Netzknoten an einen anderen der Netzknoten umfasst und wobei die Anzahl von Schritten bis zum Erreichen des zuständigen Netzknotens den Anfragepfad darstellt. Dies ermöglicht die Verteilung von populären Ressourcen beim Publizieren (Veröffentlichen), so dass sich Suchanfragen nach einem bestimmten Anfragewert durch mehrere der Netzknoten bedienen lassen.

Gemäß einer vorteilhaften Ausführungsform wird bei der Zuweisung eines Tabelleneintrags zu der verteilten Wertetabelle durch einen publizierenden Netzknoten der Tabelleneintrag über den Anfragepfad bis zu dem zuständigen Netzknoten geleitet, wobei in dem Fall, in dem festgestellt wird, dass die Häufigkeit der Abfragewerte an dem zuständigen Netzknoten den vorbestimmten Schwellenwert überschritten ist, der Tabelleneintrag einem der Netzknoten zugewiesen wird, der in dem Anfragepfad vor dem zuständigen Netzknoten angeordnet ist. Um die Last von dem Netzknoten, welcher für die Verwaltung eines bestimmten, populären Abfragewerts, zuständig ist, verringern zu können, wird die Verteilung bei einer Veröffentlichungsanfrage (dem sog. Publizieren) durch den publizierenden Netzknoten bestimmt. Die Zuweisung des Abfragewerts erfolgt dabei zu solchen Netzknoten, die der publizierende Netzknoten beim Durchschreiten des Anfragepfads kontaktiert hat. Der Vorgang wird deshalb auch als Rückpropagieren bezeichnet, da solche Netzknoten aus Sicht des zuständigen Netzknoten im Anfragepfad, genauer Veröffentlichungspfad, "zurück" liegen. Dabei wird der Verwaltungsaufwand für die Rückpropagierung auch im dynamischen Fall tragbar gehalten. Je häufiger eine Ressource, d.h. ein Abfragewert, publiziert wird, desto mehr Netzknoten teilen sich die Last der Speicherung. Zusätzlich bildet die Rückpropagierung auf den Anfragepfaden einen "Cache" für die schnellere Beantwortung von Suchanfragen und somit die Last im Netzwerk zum Beantworten.

Gemäß einer weiteren vorteilhaften Ausführungsform werden entlang des Anfragepfads Kopien eines oder mehrerer zuzuweisender Tabelleneinträge abgelegt. Entlang des Anfragepfades werden auf diese Weise "Caches" gebildet, welche Kopien der gesuchten Abfragewerte enthalten. Hierdurch wird erreicht, dass die Suchpfade eines bestimmten Abfragewertes verkürzt werden können, je populärer der Abfragewert ist. Ferner wird die Last der Suchanfragen durch mehrere der Netzknoten getragen, je populärer ein gesuchter Abfragewert ist.

In einer weiteren Ausführungsform speichert der einen Tabelleneintrag publizierende Netzknoten in dem Anfragepfad bis zum Erreichen des zuständigen Netzknotens einen jeweiligen Kennzeichner der Netzknoten. Hierdurch wird bewirkt, dass bei der Publikation eines Tabelleneintrags keine zusätzlichen Informationen von anderen als von dem publizierenden Netzknoten benötigt werden. Hierdurch kann zusätzlicher Verwaltungsaufwand für andere Netzknoten beim Rückpropagieren vermieden werden.

Gemäß einer weiteren Ausführungsform speichert der einen Tabelleneintrag publizierende Netzknoten die Anzahl der Schritte, welche in dem Anfragepfad bis zum Erreichen des Netzknotens notwendig sind, welchem der Tabelleneintrag zugewiesen wird. Dabei speichert der publizierende Netzknoten die Information, nach wie vielen Schritten (auch als Hops bezeichnet) in dem Anfragepfad der zuständige Netzknoten zur Speicherung des Tabelleneintrags gefunden wurde.

In einer weiteren Ausführungsform ist vorgesehen, dass für jeden der Tabelleneinträge der Wertetabelle eine Gültigkeitsdauer festgelegt wird, wobei mit Ablauf der Gültigkeitsdauer der Tabelleneintrag aus der Wertetabelle gelöscht wird und zur Erhaltung des Tabelleneintrags auf einem der Netzknoten der Tabelleneintrag erneut dem oder einem anderen der Netzknoten zugewiesen wird.

Die Zuweisung erfolgt bevorzugt, indem der publizierende Netzknoten die in dem Anfragepfad liegenden Netzknoten in Richtung des für den Tabelleneintrag zuständigen Netzknotens Schritt für Schritt durchläuft, bis zum Erreichen der ermittelten Schritte plus eine Anzahl weiterer Schritte. Die Anzahl der weiteren Schritte beträgt bevorzugt eins.

Eine andere Ausführungsform sieht vor, dass für jeden der Tabelleneinträge der Wertetabelle eine Gültigkeitsdauer festgelegt wird, wobei mit Ablauf der Gültigkeitsdauer der Tabelleneintrag aus der Wertetabelle gelöscht wird, und zur Erhaltung des Tabelleneintrags der Tabelleneintrag durch einen der Netzknoten, welcher den Tabelleneintrag nicht aufweist, in dem Anfragepfad von einem Netzknoten mit dem Tabelleneintrag kopiert oder verschoben wird, der in dem Anfragepfad vor dem Netzknoten angeordnet ist.

Eine Weiterbildung dieser Variante sieht vor, dass der den Tabelleneintrag kopierende Netzknoten in dem Anfragpfad benachbart zu dem Netzknoten angeordnet ist, welchem der Tabelleneintrag zugewiesen ist.

Durch den Umstand, dass Netzknoten ausfallen können, wird für jeden Tabelleneintrag eine bestimmte Gültigkeitsdauer, die auch als Lease-Zeit bezeichnet wird, definiert. Die Gültigkeitsdauer stellt sicher, dass ein Tabelleneintrag nach Ablauf dieser Gültigkeitsdauer wieder aus dem Datennetz entfernt wird. Soll ein Tabelleneintrag nach Ablauf der Gültigkeitsdauer in dem Datennetz immer noch auffindbar sein, so muss der Tabelleneintrag neu veröffentlicht werden. Hierbei können so genannte Löcher auf dem Anfragepfad entstehen. Löcher sind vorzugsweise Stellen im Anfragepfad, an denen die Netzknoten noch nicht den bestimmten Schwellenwert für einen bestimmten Abfragewert erreicht haben. Dies sind in der Regel diejenigen Netzknoten, die auf dem Anfragepfad aus Sicht des publizierenden Netzknotens weiter vorne liegen und bereits Tabellenwerte mit dem Abfragewert verwalten. Geht man davon aus, dass alle zur Vermeidung von Hot-Spots propagierten Tabellenwerte jeweils die gleiche Gültigkeitsdauer haben, werden die Gültigkeitsdauern der Abfragewerte, die sich nahe dem eigentlich zuständigen Netzknoten des Tabelleneintrags befinden, früher ablaufen als jene, die im Laufe der Zeit entlang des Abfragepfads propagiert wurden.

Zur Lösung dieses Problems liefert das erfindungsgemäße Verfahren zwei Methoden, die alternativ eingesetzt werden können. Bei dem ersten der oben beschriebenen Verfahren werden von dem publizierenden Netzknoten die Schritte gezählt, die bis zum Erreichen des Netzknotens notwendig sind, welchem der Abfragewert zugewiesen wird. Der Tabelleneintrag wird nach derselben Anzahl von Schritten neu publiziert. Sollte der betreffende Netzknoten seinen vorbestimmten Schwellenwert erreicht haben, so wird der Tabelleneintrag zum Ziel hin (d.h. auf dem Anfragepfad in Richtung zum zuständigen Netzknoten hin) eine Anzahl weiterer Schritte, bevorzugt eins, propagiert. Auf diese Weise füllt jeder der publizierenden Netzknoten eventuell entstandene Löcher eigenständig auf.

In der anderen Alternative bildet sich durch das Rückpropagieren der Tabelleneinträge eine Baumstruktur aus. Hierbei versuchen die Netzknoten die Baumstruktur selbständig aufrecht zu erhalten. Hierbei benötigt jeder Netzknoten in dem Baum Informationen über "Kinder-Knoten". "Kinder-Knoten" sind diejenigen Netzknoten, welche auf dem Anfragepfad vor ihm, d.h. in Richtung des publizierenden Netzknotens, liegen. Diese Information kann beispielsweise durch die publizierenden Netzknoten bereitgestellt werden. Läuft die Gültigkeitsdauer eines Tabelleneintrags ab, so wird dieser erneut publiziert und zwar auf dem ersten geeigneten Netzknoten auf dem Anfragepfad, der seinen Schwellwert für diesen Tabelleneintrag bzw. Abfragewert noch nicht erreicht hat. Wenn die Gültigkeitsdauer des Tabelleneintrags auf einem der diesen speichernden Netzknoten abläuft, stellt dieser Netzknoten eine Anfrage an seine "Kinder-Knoten" in dem Baum nach dem Tabelleneintrag mit dem betreffenden Abfragewert und kopiert oder verschiebt diese zu sich. Damit können Löcher automatisch aufgefüllt werden.

Neben dem oben beschriebenen Verfahren betrifft die Erfindung ferner ein dezentrales Datennetz umfassend eine Vielzahl von Netzknoten, wobei das Datennetz derart ausgestaltet ist, dass ein Verfahren nach einem der vorhergehenden Ansprüche durchführbar ist. Das Datennetz ist beispielsweise ein Computernetz, in dem die Netzknoten einen oder mehrere Rechner umfassen, insbesondere ein Peer-to-Peer-Netz, z.B. in der Form eines Chord-Rings.

Die Erfindung wird nachfolgend anhand von Ausführungsbeispielen der beigefügten Figuren weiter beschrieben. Es zeigen:
- FIG 1: eine schematische Darstellung eines auf einer verteilten Hash-Tabelle basierenden Peer-to-Peer-Netzes, in dem das erfindungsgemäße Verfahren einsetzbar ist,
- FIG 2: eine schematische Darstellung des Datennetzes aus FIG. 1, in dem ein beispielhafter Anfragepfad dargestellt ist,
- FIG 3: eine schematische Darstellung des Datennetzes aus FIG. 1, in dem der Austausch von Nachrichten zur Zuweisung eines Abfragewerts zu einem Netzknoten dargestellt ist,
- FIG 4: eine schematische Darstellung des Datennetzes aus FIG. 1, in welchem das Prinzip des Caching populärer Tabelleneinträge entlang eines Anfragepfades dargestellt ist,
- FIG 5A: eine schematische Darstellung des Datennetzes aus FIG. 1, in dem mehrere Suchanfragen dargestellt sind, welche zur Ausbildung einer Baumstruktur herangezogen werden,
- FIG 5B: eine Darstellung der Baumstruktur, welche sich aus den Suchanfragen in dem Datennetz gemäß FIG 5A ergibt, und
- FIG 6: eine schematische Darstellung des Datennetzes aus FIG. 1, anhand dessen Eigenheiten des Datennetzes ersichtlich werden, welche durch die Erfindung genutzt werden.

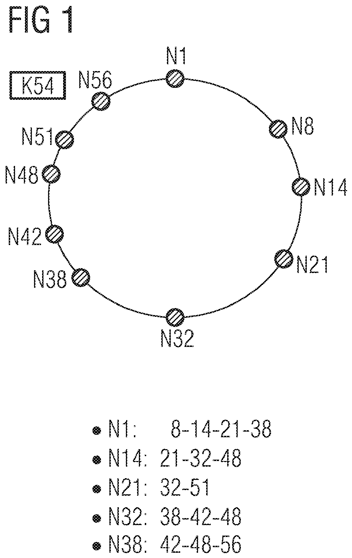

In Figur 1 ist ein Datennetz mit einer Anzahl an Netzknoten N1, N8, N14, N21, N32, N38, N42, N48, N51 und N56 dargestellt, welches zur Speicherung und Verwaltung einer verteilten Hash-Tabelle geeignet ist. Die Verwendung von verteilten Hash-Tabellen ermöglicht die Realisierung skalierbarer Peer-to-Peer-Netze, in denen garantiert werden kann, dass jeder Netzknoten, auch als Peer bezeichnet, jede in dem Datennetz veröffentlichte Information finden kann. Um die Skalierbarkeit des Datennetzes gewährleisten zu können, ist es in der Regel notwendig, dass ein Peer lediglich eine Teilmenge der gesamten Topologie des Datennetzes kennt. Die einzelnen Netzknoten dieser Teilmenge werden als "Finger" bezeichnet.

Jedem der Netzknoten, der in einem als verteilte Hash-Tabelle strukturierten Datennetz teilnehmen möchte, wird ein Kennzeichner aus einem binären Schlüsselraum, welcher z.B. n=160 Bit groß ist, zugewiesen. Den im Peer-to-Peer-Datennetz austauschbaren Informationen, welche nachfolgend als Ressourcen bezeichnet werden und in der Hash-Tabelle als Tabelleneinträge gespeichert werden, werden ebenfalls ein oder mehrere Schlüssel oder Kennzeichner zugewiesen.

Die Kennzeichner oder Schlüssel der Ressourcen werden dynamisch bei der Publikation und aufgrund von spezifischen Suchinformationen generiert. Unter Publikation ist hierbei zu verstehen, dass einer der Netzknoten eine Ressource in der verteilten Hash-Tabelle erstellen möchte. Hierzu muss die Ressource einem der Netzknoten des Datennetzes zugewiesen und von diesem verwaltet werden. Zur Erstellung des Kennzeichners einer Ressource werden Schlüsselworte, die die Ressource beschreiben, gehasht. Diese Hash-Werte dienen als Kennzeichner und bestimmen gleichzeitig, welcher oder welche Netzknoten im Datennetz für die Verwaltung der Ressource zuständig sind. Für eine Ressource ist genau der Netzknoten zuständig, dessen Kennzeichner kleiner oder gleich dem Abfragewert, somit dem gehashten Schlüsselwort des Tabelleneintrags ist. Zudem wird die Ressource in dem Datennetz eindeutig durch den Abfragewert identifiziert. Dies ist dem Fachmann auch unter dem Begriff "Fingerprint" geläufig. Dies kann beispielsweise der generierte Hash-Wert durch das Hashen des gesamten Inhalts der Ressource sein.

Zur Veranschaulichung wird in dem nachfolgenden Ausführungsbeispiel die Ausbildung einer verteilen Hash-Tabelle gemäß dem Peer-to-Peer-Protokoll Chord beschrieben. In dem Protokoll Chord erhalten die Netzknoten Kennzeichner aus einem 160-bit Schlüsselraum und werden virtuell in einem Ring angeordnet, wie dies in den Figuren 1 bis 5A und 6 dargestellt ist. Die Finger eines Netzknotens sind dabei logarithmisch über den Ring verteilt. Dies bedeutet, jeder Netzknoten kennt denjenigen Netzknoten, dessen Kennzeichner den nächst kleineren Kennzeichner zum Hash-Wert (ID+2ⁱmod2¹⁶⁰) für alle i=1,..,160 aufweist. In Figur 1 sind unterhalb des Datennetzes die Finger für die Netzknoten N1, N14, N21, N32 und N38 beispielhaft angegeben. Die Finger bestimmen sich allgemein nach dem Kennzeichner des Netzknotens (z.B. 1 für den Netzknoten N1, 14 für den Netzknoten N14, 21 für den Netzknoten N21, usw.) zuzüglich 2ⁱ. Damit ergibt sich für den Netzknoten N1 folgende Fingertabelle: N1+1→8, N1+2→8, N1+4→8, N1+8→14, N1+16→21, N1+32→38. Entsprechend bestimmen sich die Finger für die anderen Netzknoten.

Wird eine Ressource mit einem populären Abfragewert gesucht, verwenden alle Netzknoten jeweils ihren dem Abfragewert der Ressource nächstgelegenen Finger. Dadurch kann eine Suchanfrage in maximal O(log m) Schritten beantwortet werden, wobei m die Anzahl von aktiven Netzknoten im Datennetz ist. Alle Suchanfragen nach dem Abfragewert landen bei herkömmlichen Vorgehensweisen auf diesem Netzknoten, der möglicherweise wegen der hohen Anzahl von Anfragen ausfällt und somit zum einen diesen Tabelleneintrag für andere Netzknoten nicht auffindbar macht, zum anderen die weitere Stabilität des Datennetzes in der Realität aufwendig wieder herzustellen ist.

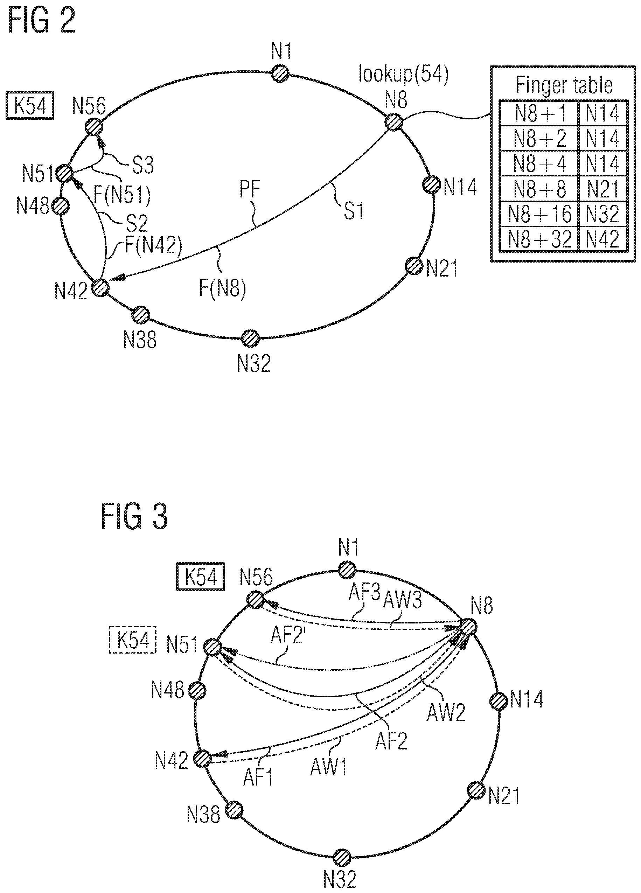

Anhand Figur 2 wird die Erstellung eines Anfragepfads TF in dem in Figur 1 beschriebenen Datennetz näher erläutert, welcher die Grundlage für das erfindungsgemäße Verfahren bildet.

Im Rahmen der vorliegenden Beschreibung ist der Begriff des Abfragepfads sowohl als Publikationspfad als auch als Suchpfad zu verstehen. Es wird davon ausgegangen, dass der Netzknoten N8, dessen Finger-Tabelle zur Veranschaulichung nochmals dargestellt ist, eine Ressource mit dem Abfragewert K54 publizieren (veröffentlichen) möchte. Dazu durchläuft Netzknoten N8 seine Finger-Tabelle, in der die Netzknoten, welche im Datennetz aktiv sind, aufgeführt sind. Der Netzknoten N8 wählt für seine Veröffentlichungsanfrage jenen seiner Finger F(N8) mit dem zugehörigen Netzknoten, dessen Kennzeichner am nächsten zu dem gesuchten Abfragewert K54 ist. Dies ist im vorliegenden Fall der Netzknoten N42. Da der Netzknoten N42 nicht für den Tabelleneintrag mit dem Abfragewert K54 zuständig ist, leitet er, d.h. N42, die Veröffentlichungsanfrage nach demselben Prinzip weiter, bis der verantwortliche Netzknoten (N56) gefunden wird. Für seine Veröffentlichungsanfrage wählt der Netzknoten N42 jenen seiner Finger F(N42) mit dem zugehörigen Netzknoten, dessen Kennzeichner am nächsten zum Abfragewert K54 ist, was im vorliegenden Fall der Netzknoten N51 ist. N51 wiederholt das beschriebene Vorgehen entsprechend. Der Anfragepfad PF ist demnach N8-N42-N51-N56. Zur Publikation der Ressource mit dem Abfragewert K54 sind somit die Schritte S1, S2, S3 bis zum Erreichen des zuständigen Netzknotens N56 notwendig.

In dem Fall, in dem der Netzknoten N8 die Ressource nicht publizieren, sondern die Ressource mit dem Abfragewert K56 suchen möchte, entspricht der Anfragepfad PF dem in Figur 2 dargestellten Pfad, da in verteilten Hash-Tabellen grundsätzlich nach dem Netzknoten mit dem entsprechenden Kennzeichner gesucht wird.

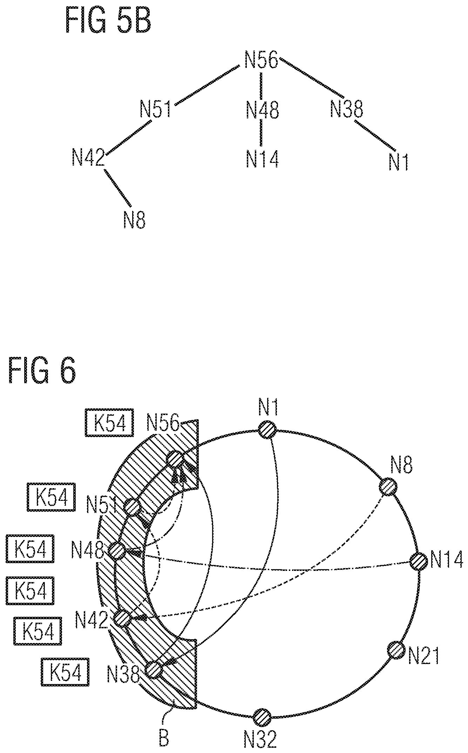

Bei verteilten Hash-Tabellen erfolgt die Beobachtung, dass die Anfragepfade, die von unterschiedlichen Netzknoten ausgehen, sich in den letzten Schritten immer ähnlicher werden, wie dies beispielsweise der Figur 6 entnehmbar ist. Mit dem Bezugszeichen B ist darin ein Bereich gekennzeichnet, welcher jeweils die letzten Schritte von Suchanfragen der Netzknoten N1, N8, N14 umfasst. Dabei geht gut hervor, dass im Ausführungsbeispiel die Netzknoten N38, N42, N48 und N51 zusätzlich zu dem für den Abfragewert K54 zuständigen Netzknoten N56 kontaktiert werden. Diese Eigenheit wird durch Rückpropagierung und Caching ausgenutzt, um die gegebene Struktur verteilter Hash-Tabellen besser zu nutzen.

Um die Stabilität des Datennetzes in der Praxis zu verbessern, schlägt die Erfindung die Rückpropagierung populärer Abfragewerte entlang des Anfragepfads vor.

Im Ausführungsbeispiel gemäß Figur 3 möchte der Netzknoten N8 die Ressource mit dem Abfragewert K56 publizieren. Hierzu sendet der Netzknoten N8 eine Anfragenachricht AF1 an den Netzknoten N42, welcher den Finger darstellt, der am nächsten dem Abfragewert K54 ist. Der Netzknoten N42 überträgt an den Netzknoten N8 eine Antwortnachricht AW1, dass er (noch) keinen Tabelleneintrag mit dem Abfragewert K54 verwaltet und nennt dem Netzknoten N8 seinen dem Abfragewert K54 nächstgelegenen Finger. Dies ist, wie anhand Figur 2 erklärt, der Netzknoten N51. Der Netzknoten N8 kontaktiert den Netzknoten N51 auf die eben beschriebene Art und Weise, indem er eine Anfragenachricht AF2 an den Netzknoten N51 sendet. N51 überträgt eine Antwortnachricht AW2 an den Netzknoten N8, indem er diesem antwortet, dass er ebenfalls keine Ressource mit dem Abfragewert K54 verwaltet und nennt seinerseits den dem Abfragewert K54 nächstgelegenen Finger: N56. Der Netzknoten N8 überträgt eine Abfragenachricht AF3 an den Netzknoten N56. Als Antwortnachricht AW3 überträgt der Netzknoten N56 an den Netzknoten N8, dass er Ressourcen mit dem Abfragewert K54 verwaltet, jedoch einen gesetzten Schwellenwert bereits überschritten hat. Die Übertragung von Anfragenachricht AF1 und Antwortnachricht AW1 wird im Rahmen des Schritts S1 durchgeführt. Entsprechendes gilt für die Anfragenachrichten AF2 und AF3 bzw. die Antwortnachrichten AW2 und AW3, welche in den Schritten S2 und S3 ausgetauscht werden. Der Netzknoten N8 geht daraufhin einen Schritt zurück und überträgt eine Anfragenachricht AF2' an den Netzknoten N51, welchem er die Ressource mit dem Abfragewert K54 zuweist. Somit publiziert der Netzknoten N8 die Ressource auf dem Netzknoten N51. Die Rückpropagierung des Abfragewerts K54 ist mit der durchbrochenen Umrandung gekennzeichnet. Sollte der Netzknoten N51 seinen Schwellenwert überschreiten, z.B. wenn ein anderer Netzknoten ebenfalls eine Ressource mit dem Abfragewert K54 publizieren möchte, dann wird auf dem betreffenden Anfragepfad wiederum ein Schritt weiter hinten publiziert. Auf diese Weise wird die Last der Speicherung der Ressource mit besonders populären Abfragewerten verteilt.

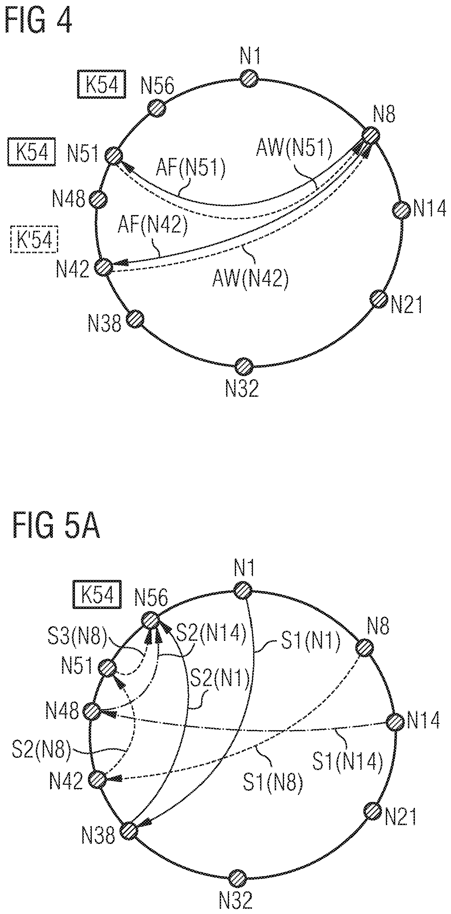

In Figur 4 wird eine weitere Ausbildung des erfindungsgemäßen Verfahrens beschrieben. In diesem werden populäre Ressourcen, im Ausführungsbeispiel wieder mit dem Abfragewert K54, entlang des Anfragepfades PF gespeichert (gecached). Es wird im Ausführungsbeispiel angenommen, dass der Netzknoten N8 nach einer Ressource mit dem Abfragewert K54 sucht. Der zu dem Abfragewert K54 nächstgelegene Finger (Netzknoten N42), sendet eine Antwortnachricht AW(N42) an den Netzknoten N8, worin er mit dessen nächstgelegenem Finger (N51) antwortet. Der Abfragewert K54 wurde, wie oben beschrieben, bereits auf den Netzknoten N51 rückpropagiert. Hierdurch verkürzt sich der Suchpfad um einen Schritt. Dabei kontaktiert der Netzknoten N8, wie ebenfalls bereits beschrieben, den Netzknoten N51, indem er eine Anfragenachricht AF(N51) an den Netzknoten N51 überträgt. Der Netzknoten N51 antwortet wiederum mit einer Antwortnachricht AW(N51). Weiterhin wird eine Kopie der Ressource mit dem Abfragewert K54 auf dem Anfragepfad angelegt (dies ist in der Figur mit K'54 gekennzeichnet), damit bei späteren Anfragen der Anfragepfad weiter verkürzt wird. Dadurch ist die Last der Beantwortung von Suchanfragen verteilt.

In dem Ausführungsbeispiel gemäß den Figuren 5A, 5B und 6 wird zudem eine vorgegebene Gültigkeitsdauer einer Ressource, die so genannte Lease-Zeit, berücksichtigt. Die Gültigkeitsdauer garantiert, dass eine Ressource nach Ablauf der Lease-Zeit wieder aus dem Datennetz entfernt wird. Um die Entstehung von Löchern auf dem Anfragepfad zu berücksichtigen, wird gemäß einer ersten Variante, die in den Figuren 5A, 5B dargestellt ist, eine Baumstruktur herangezogen, die sich beim Rückpropagieren ausbildet. Hierbei sollen Netzknoten, auf welchen die Gültigkeitsdauer einer Ressource abläuft, selbständig die Baumstruktur der Rückpropagierung aufrechterhalten. Bei der Publikation der Ressource teilt der publizierende Netzknoten jedem Netzknoten auf dem Pfad mit, welchen Netzknoten er zuvor angefragt hat. Falls der angefragte Netzknoten seinen vorgegebenen Schwellwert erreicht hat, soll dieser darüber in Kenntnis sein, dass die Ressource nun auf dem Netzknoten vor ihm auf dem Anfragepfad publiziert wird. In der Baumstruktur stellen diese Netzknoten so genannte Kinder-Knoten dar. Entstehen nun in einem Abschnitt, in welchem ein Tabelleneintrag rückpropagiert wurde, Löcher oder Lücken, weil auf einem Netzknoten die Gültigkeitsdauer der Ressource abgelaufen ist oder ein neuer Netzknoten dazu gekommen ist, dann kann jeder Netzknoten in dem Anfragepfad seinen jeweiligen Vorgänger kontaktieren, ob der gerade abgelaufene Tabelleneintrag oder jene für die er verantwortlich ist, rückpropagiert ist.

In Figur 5B ist beispielhaft eine derartige Baumstruktur dargestellt. Von den Netzknoten N1, N8, N14 aus sind die Anfragepfade mit dem Ziel Abfragewert K54 wie folgt:
Von N1: N38-N56
Von N8: N42-N51-N56
Von N14: N8-N56.

Ausgehend von dem für den Abfragewert K54 zuständigen Netzknoten N56, von dem aus auf den Anfragepfaden nach hinten propagiert wird und als Wurzel der Propagierung verstanden wird, ergibt sich der in Figur 5B gezeigte Baum. Wird z.B. für die Ressource mit dem Abfragewert K56 der Schwellwert auf eins gesetzt und geht man weiter davon aus, dass die Netzknoten N1, N8 und N14 diesen Tabelleneintrag im Datennetz publizieren, so wird die erste Publikation dem Netzknoten N56 zugewiesen. Die nachfolgenden Publikationen werden den Netzknoten N51 und N48 zugewiesen. Die Gültigkeitsdauer läuft dann zunächst am Netzknoten N56 ab, so dass hier ein Loch entsteht. Durch die Kenntnis des Netzknotens N56 über seine Kinder-Knoten N51, N48, N38 kann der Netzknoten N56 die auf einem der Netzknoten N58, N48 gespeicherten Informationen zu sich verschieben. Hierdurch wird das Loch am Netzknoten N56 automatisch gefüllt.

Eine andere Variante, Löcher in Anfragepfaden zu vermeiden besteht darin, dass sich der publizierende Netzknoten bei der Publikation merkt, nach welcher Anzahl von Schritten er publiziert wird. Im Beispiel gemäß Figur 3 hat der für den Abfragewert K54 zuständige Netzknoten N56 beispielsweise seinen Schwellwert erreicht. Demgemäß wird die Ressource auf dem Netzknoten im Anfragepfad davor, und somit nach zwei Schritten, publiziert. Wenn die Gültigkeitsdauer der Ressource auf dem Netzknoten N51 ausläuft, publiziert der Netzknoten N8 die Ressource z.B. nach 2+1 Schritten in seinem Anfragepfad. Dies bedeutet, der Netzknoten N8 versucht die Ressource auf dem Netzknoten N56 zu publizieren. Wenn dort der Schwellenwert überschritten ist, erfolgt die bereits beschriebene Rückpropagation. Der Grund für die Wahl von 2+1 Schritten besteht darin, dass die Gültigkeitsdauer der Ressourcen zum Ziel hin, d.h. dem eigentlich zuständigen Netzknoten N56, immer früher abläuft als auf dem Netzknoten davor im Anfragepfad. Diese werden schließlich erst zur Rückpropagierung genutzt, wenn Netzknoten nahe dem Ziel und das Ziel ihre Limits erreicht haben. Auf diese Weise können Löcher auf dem Anfragepfad zum Ziel hin aufgefüllt werden.

Durch die Erfindung kann die Last von Anfragen populärer Ressourcen besser verteilt werden, wobei die Eigenschaften des Datennetzes ausgenutzt werden. Dabei kann das Verfahren auch unter Churn ausgenutzt werden, ohne dass dazu das Datennetz erweitert werden müsste. Durch die Erfindung wird nicht nur die Last der Speicherung von Tabelleneinträgen, sondern auch die Last der Anfragebeantwortung gelöst. Hierdurch können einzelne Netzknoten entlastet werden, die ansonsten einer Hot-Spot-Problematik ausgesetzt wären. Es ist auch die Entlastung des Datennetzes bei so genannten "Flash Crowds" möglich. Unter dem Begriff "Flash Crowd" wird das Phänomen einer plötzlichen Popularität eines bestimmten Abfragewerts und dem dadurch entstehenden Anfrageverhalten nach entsprechenden Ressourcen verstanden.

## Patentansprüche

1. Verfahren zum Betrieb eines dezentralen Datennetzes umfassend eine Mehrzahl von Netzknoten (Ni), wobei die Netzknoten (Ni) Anfragen mit Hilfe von Abfragewerten (Ki) in das Datennetz richten können und jedem der Netzknoten (Ni) ein eindeutiger Kennzeichner aus einem Schlüsselraum zugewiesen ist, bei dem:
a) mehreren Netzknoten (Ni) jeweils ein oder mehrere Tabelleneinträge einer auf die Netzknoten (Ni) verteilten Wertetabelle zugewiesen sind, wobei jeder Tabelleneintrag einen Abfragewert (Ki) aus dem Schlüsselraum und dem Abfragewert (Ki) zugeordnete Daten umfasst, wobei der Netzknoten (Ni) für einen Abfragewert (Ki) zuständig ist, dessen Kennzeichner kleiner oder gleich dem Abfragewert (Ki) ist;
b) für die mehreren Netzknoten (Ni) jeweils die Häufigkeit überwacht wird, mit der Anfragen für die einem jeweiligen Netzknoten (Ni) zugewiesenen Abfragewerte an den jeweiligen Netzknoten (Ni) gerichtet werden;
c) falls in Schritt b) festgestellt wird, dass die Häufigkeit der Anfragen für einen oder mehrere Abfragewerte an einen jeweiligen Netzknoten (Ni) einen vorbestimmten Schwellenwert überschreitet, zumindest der oder die Tabelleneinträge dieses oder dieser Abfragewerte wenigstens einem anderen Netzknoten (Ni) zugewiesen werden, welcher in einem Anfragepfad (PF) der Anfrage liegt.

2. Verfahren nach Anspruch 1, bei dem bei einer in das Datennetz gerichteten Anfrage durch einen der Netzknoten (Ni) ein oder mehrere Schritte bis zum Erreichen des zuständigen Netzknotens (Ni) erfolgen, wobei jeder Schritt eine Anfrage von einem der Netzknoten (Ni) an einen anderen der Netzknoten (Ni) umfasst und wobei die Anzahl an Schritten bis zum Erreichen des zuständigen Netzknotens (Ni) den Anfragepfad (PF) darstellt.

3. Verfahren nach Anspruch 1 oder 2, bei dem bei der Zuweisung eines Tabelleneintrags zu der verteilten Wertetabelle durch einen publizierenden Netzknoten (Ni) der Tabelleneintrag über den Anfragepfad (PF) bis zu dem zuständigen Netzknoten (Ni) geleitet wird, wobei in dem Fall, in dem festgestellt wird, dass die Häufigkeit der Abfragewerte (Ki) an dem zuständigen Netzknoten (Ni) den vorbestimmten Schwellenwert überschritten ist, der Tabelleneintrag einem der Netzknoten (Ni) zugewiesen wird, der in dem Anfragepfad (PF) vor dem zuständigen Netzknoten (Ni) angeordnet ist.

4. Verfahren nach einem der vorherigen Ansprüche, bei dem entlang des Anfragepfads (PF) Kopien eines oder mehrerer zuzuweisender Tabelleneinträge abgelegt werden.

5. Verfahren nach einem der vorherigen Ansprüche, bei dem der einen Tabelleneintrag publizierende Netzknoten (Ni) in dem Anfragepfad (PF) bis zum Erreichen des zuständigen Netzknotens (Ni) die Kennzeichner der Netzknoten (Ni) speichert.

6. Verfahren nach einem der vorherigen Ansprüche, bei dem der einen Tabelleneintrag publizierende Netzknoten (Ni) die Anzahl der Schritte speichert, welche in dem Anfragepfad (PF) bis zum Erreichen des Netzknotens (Ni) notwendig sind, welchem der Tabelleneintrag zugewiesen wird.

7. Verfahren nach einem der vorherigen Ansprüche, bei dem für jeden der Tabelleneinträge der Wertetabelle eine Gültigkeitsdauer festgelegt wird, wobei mit Ablauf der Gültigkeitsdauer der Tabelleneintrag aus der Wertetabelle gelöscht wird, und zur Erhaltung des Tabelleneintrags auf einem der Netzknoten (Ni) der Tabelleneintrag erneut dem oder einem anderen der Netzknoten (Ni) zugewiesen wird.

8. Verfahren nach Anspruch 7, bei dem die Zuweisung erfolgt, indem der publizierende Netzknoten (Ni) die in dem Anfragepfad (PF) liegenden Netzknoten (Ni) in Richtung des für den Tabelleneintrag zuständigen Netzknotens (Ni) Schritt für Schritt durchläuft, bis zum Erreichen der ermittelten Schritte plus eine Anzahl weiterer Schritte.

9. Verfahren nach Anspruch 8, bei dem die Anzahl der weiteren Schritte 1 beträgt.

10. Verfahren nach einem der Ansprüche 1 bis 7, bei dem für jeden der Tabelleneinträge der Wertetabelle eine Gültigkeitsdauer festgelegt wird, wobei mit Ablauf der Gültigkeitsdauer der Tabelleneintrag aus der Wertetabelle gelöscht wird, und zur Erhaltung des Tabelleneintrags der Tabelleneintrag durch einen der Netzknoten (Ni), welcher den Tabelleneintrag nicht aufweist, in dem Anfragepfad (PF) von einem Netzknoten (Ni) mit dem Tabelleneintrag kopiert oder verschoben wird, der in dem Anfragepfad (PF) vor dem Netzknoten (Ni) angeordnet ist.

11. Verfahren nach Anspruch 10, bei dem der den Tabelleneintrag kopierende Netzknoten (Ni) in dem Anfragepfad (PF) benachbart zu dem Netzknoten (Ni) angeordnet ist, welchem der Tabelleneintrag zugewiesen ist.

12. Dezentrales Datennetz, umfassend eine Vielzahl von Netzknoten (Ni), wobei das Datennetz derart ausgestaltet ist, dass ein Verfahren nach einem der vorhergehenden Ansprüche durchführbar ist.

13. Datennetz nach Anspruch 12, wobei das Datennetz ein Computernetz ist, in dem die Netzknoten (Ni) einen oder mehrere Rechner umfassen.

14. Datennetz nach Anspruch 12 oder 13, wobei das Datennetz ein Peer-to-Peer-Netz, insbesondere ein Chord-Ring, ist.

## Claims

1. A method for operating a local area data network comprising a plurality of network nodes (Ni), wherein the network nodes (Ni) can direct requests into the data network using query values (Ki), and a unique identifier from a key space is assigned to each of the network nodes (Ni), in which method:
a) one or more table entries from a value table distributed to the network nodes (Ni) are assigned to each of a plurality of network nodes (Ni), each table entry comprising a query value (Ki) from the key space and data allocated to the query value (Ki), and the network node (Ni) being responsible for a query value (Ki), the identifier of which is less than or equal to the query value (Ki);
b) for each of the plurality of network nodes (Ni), the frequency with which requests for the query values assigned to a respective network node (Ni) are directed to the respective network node (Ni) is monitored,
c) and if it is ascertained in step b) that the frequency of the requests for one or more query values to a respective network node (Ni) exceeds a predetermined threshold value, at least the table entry or entries for this or these query values are assigned to at least one other network node (Ni) which is situated in a request path (PF) for the request.

2. The method according to claim 1, in which, when a request is directed into the data network by one of the network nodes (Ni), one or more steps are carried out until the responsible network node (Ni) is reached, wherein each step comprises a request from one of the network nodes (Ni) to another of the network nodes (Ni), and wherein the number of steps required until the responsible network node (Ni) is reached represents the request path (PF).

3. The method according to claim 1 or 2, in which, when a table entry is assigned to the distributed value table by a publishing network node (Ni), the table entry is routed by way of the request path (PF) to the responsible network node (Ni), wherein, if it is found that the frequency of the query values (Ki) at the responsible network node (Ni) exceeds the predetermined threshold value, the table entry is assigned to one of the network nodes (Ni) which is located upstream of the responsible network node (Ni) in the request path (PF).

4. The method according to any of the preceding claims, in which copies of one or more table entries to be assigned are stored along the request path (PF).

5. The method according to any of the preceding claims, in which the network node (Ni) publishing a table entry stores the identifier of the network node (Ni) in the request path (PF) until the responsible network node (Ni) is reached.

6. The method according to any of the preceding claims, in which the network node (Ni) publishing a table entry stores the number of steps required in the request path (PF) until the network node (Ni) to which the table entry is assigned is reached.

7. The method according to any of the preceding claims, in which for each of the table entries in the value table, a period of validity is specified, wherein the table entry is deleted from the value table once the period of validity has expired, and the table entry is assigned once again to the network node (Ni) in question or to another of the network nodes in order to maintain the table entry on one of the network nodes (Ni).

8. The method according to claim 7, in which the assignment preferably involves the publishing network node (Ni) passing step by step through the network nodes (Ni) situated in the request path (PF) in the direction of the network node (Ni) which is responsible for the table entry, until the determined steps, plus a number of additional steps, are reached.

9. The method according to claim 8, in which the number of additional steps is 1.

10. The method according to any of claims 1 to 7, in which a period of validity is specified for each of the table entries in the value table, wherein the table entry is deleted from the value table once the period of validity has expired, and in order to maintain the table entry, the table entry is copied or moved by one of the network nodes (Ni) that does not have the table entry from a network node (Ni) which has the table entry in the request path (PF), the former network node (Ni) being located upstream of the network node (Ni) in the request path (PF).

11. The method according to claim 10, in which the network node (Ni) copying the table entry is located in the request path (PF) adjacent to the network node (Ni) to which the table entry is assigned.

12. A local area data network comprising a plurality of network nodes (Ni), wherein the data network is configured for carrying out a method according to any of the preceding claims.

13. The data network according to claim 12, wherein the data network is a computer network in which the network nodes (Ni) comprise one or more computers.

14. The data network according to claim 12 or 13, wherein the data network is a peer-to-peer network, in particular a chord ring.

## Revendications

1. Procédé servant à exploiter un réseau de données décentralisé comprenant une pluralité de noeuds de réseau (Ni), les noeuds de réseau (Ni) pouvant adresser des requêtes à l'aide de valeurs d'interrogation (Ki) au réseau de données et un identifiant clair provenant d'un espace chiffré étant attribué à chacun des noeuds de réseau (Ni), dans lequel :
a) respectivement une ou plusieurs entrées de tableau d'un tableau de valeurs réparti sur les noeuds de réseau (Ni) étant attribuées à plusieurs noeuds de réseau (Ni), chaque entrée de tableau comprenant une valeur d'interrogation (Ki) provenant de l'espace chiffré et des données associées à la valeur d'interrogation (Ki), le noeud de réseau (Ni) étant en charge d'une valeur d'interrogation (Ki), dont l'identifiant est inférieur ou égal à la valeur d'interrogation (Ki) ;
b) pour les nombreux noeuds de réseau (Ni), respectivement la fréquence est surveillée, à laquelle des requêtes pour les valeurs d'interrogation attribuées à un noeud de réseau (Ni) respectif sont adressées au noeud de réseau (Ni) respectif ;
c) s'il est constaté à l'étape b) que la fréquence des requêtes pour une ou plusieurs valeurs d'interrogation à un noeud de réseau (Ni) respectif dépasse une valeur de seuil prédéfinie, au moins l'entrée de tableau ou les entrées de tableau de ladite valeur d'interrogation ou desdites valeurs d'interrogation sont attribuées au moins à un autre noeud de réseau (Ni), qui se trouve dans un chemin de requête (PF) de la requête.

2. Procédé selon la revendication 1, dans lequel pour une requête adressée au réseau de données par l'un des noeuds de réseau (Ni), une ou plusieurs étapes sont effectuées jusqu'à atteindre le noeud de réseau (Ni) en charge, chaque étape comprenant une requête d'un des noeuds de réseau (Ni) à l'attention d'un autre des noeuds de réseau (Ni) et le nombre d'étapes jusqu'à atteindre le noeud de réseau (Ni) en charge constituant le chemin de requête (PF).

3. Procédé selon la revendication 1 ou 2, dans lequel lors de l'attribution d'une entrée de tableau au tableau de valeurs réparti par un noeud de réseau (Ni) procédant à la publication, l'entrée de tableau est acheminée en passant par le chemin de requête (PF) jusqu'au noeud de réseau (Ni) en charge, l'entrée de tableau étant attribuée à l'un des noeuds de réseau (Ni), qui est disposé sur le chemin de requête (PF) avant le noeud de réseau (Ni) en charge s'il est constaté que la fréquence des valeurs d'interrogation (Ki) sur le noeud de réseau (Ni) en charge a dépassé la valeur de seuil prédéfinie.

4. Procédé selon l'une quelconque des revendications précédentes, dans lequel des copies d'une ou de plusieurs entrées de tableau à attribuer sont enregistrées le long du chemin de requête (PF).

5. Procédé selon l'une quelconque des revendications précédentes, dans lequel le noeud de réseau (Ni) publiant une entrée de tableau mémorise, sur le chemin de requête (PF) jusqu'à atteindre le noeud de réseau (Ni) en charge, les identifiants des noeuds de réseau (Ni).

6. Procédé selon l'une quelconque des revendications précédentes, dans lequel le noeud de réseau (Ni) publiant l'entrée de tableau mémorise le nombre des étapes, qui sont nécessaires sur le chemin de requête (PF) jusqu'à atteindre le noeud de réseau (Ni), auquel l'entrée de tableau est attribuée.

7. Procédé selon l'une quelconque des revendications précédentes, dans lequel une durée de validité est fixée pour chacune des entrées de tableau du tableau de valeurs, l'entrée de tableau étant supprimée du tableau de valeurs à l'expiration de la durée de validité, et l'entrée de tableau étant attribuée à nouveau, afin de conserver l'entrée de tableau sur l'un des noeuds de réseau (Ni), à au noeud de réseau ou à un autre des noeuds de réseau (Ni).

8. Procédé selon la revendication 7, dans lequel l'attribution est effectuée par le fait que le noeud de réseau (Ni) procédant à la publication passe les noeuds de réseau (Ni) se trouvant sur le chemin de requête (PF) en direction du noeud de réseau (Ni) en charge de l'entrée de tableau étape par étape jusqu'à atteindre les étapes déterminées plus un nombre d'étapes supplémentaires.

9. Procédé selon la revendication 8, dans lequel le nombre des étapes supplémentaires est égal à 1.

10. Procédé selon l'une quelconque des revendications 1 à 7, dans lequel pour chacune des entrées de tableau du tableau de valeurs une durée de validité est fixée, l'entrée de tableau étant supprimée du tableau de valeurs à l'expiration de la durée de validité, et l'entrée de tableau étant copiée ou glissée, afin de conserver l'entrée de tableau par l'un des noeuds de réseau (Ni), qui ne présente pas l'entrée de tableau, sur le chemin de requête (PF) par un noeud de réseau (Ni) avec l'entrée de tableau, qui est disposée sur le chemin de requête (PF) avant le noeud de réseau (Ni).

11. Procédé selon la revendication 10, dans lequel le noeud de réseau (Ni) copiant l'entrée de tableau est disposé sur le chemin de requête (PF) de manière adjacente au noeud de réseau (Ni), auquel l'entrée de tableau est attribuée.

12. Réseau de données décentralisé, comprenant une pluralité de noeuds de réseau (Ni), le réseau de données étant configuré de telle manière qu'un procédé selon l'une quelconque des revendications précédentes peut être mis en oeuvre.

13. Réseau de données selon la revendication 12, le réseau de données étant un réseau d'ordinateurs, dans lequel les noeuds de réseau (Ni) comprennent un ou plusieurs calculateurs.

14. Réseau de données selon la revendication 12 ou 13, le réseau de données étant un réseau pair à pair (P2P), en particulier un réseau Chord.
